# FASCICULE DE BREVET EUROPEEN

(11) **EP 1 751 775 B1**
(45) Date de publication et mention de la délivrance du brevet: **17.10.2012**
(21) Numéro de dépôt: 05805037.8
(22) Date de dépôt: 01.06.2005
(51) Int. Cl.: G21F 9/16, C01G 13/00, G21F 9/28, C22B 43/00, G21F 9/04, G21F 9/10, C22B 7/00, G21F 9/30

(54) **PROCEDE DE STABILISATION DU MERCURE METALLIQUE PAR LE SOUFRE**
VERFAHREN ZUR STABILISIERUNG VON METALLISCHEM QUECKSILBER MITTELS SCHWEFEL
METHOD FOR STABILISATION OF METALLIC MERCURY USING SULPHUR

(30) Priorité: 03.06.2004 FR 0451103
(43) Date de publication de la demande: 14.02.2007
(73) Titulaire: STMI Société des Techniques en Milieu Ionisant, F-91196 Gif-sur-Yvette (FR); UNIVERSITE PARIS-SUD (PARIS XI), 91405 Orsay Cédex (FR); Centre National de la Recherche Scientifique, 75016 Paris (FR)
(72) Inventeur: RIVIERE-HUC, Christelle, F-91190 Gif sur Yvette (FR); HUC, Vincent, F-91190 Gif sur Yvette (FR); BOSSE, Emilie, F-95800 Cergy le Haut (FR)
(74) Mandataire: Poulin, Gérard
(86) Numéro de dépôt international: PCT/FR2005/050402
(87) Numéro de publication internationale: WO 2006/016076

(56) Documents cités:
- DE-C- 453 523
- US-A- 3 061 412
- US-A- 5 034 054
- US-B1- 6 399 849
- US-B1- 6 403 044

## Description

L'invention concerne un procédé de stabilisation du mercure métallique par le soufre.

Le procédé s'applique en particulier à la stabilisation du mercure contaminé par des radioéléments.

Le domaine technique de l'invention peut être défini comme celui du traitement des déchets à base de mercure en vue de leur stockage ou de leur élimination.

Le stockage direct ou l'incinération est impossible à cause des vapeurs de mercure indésirables et toxiques.

De ce fait, des procédés visant à réduire la mobilité du mercure dans l'environnement ont déjà été mis en oeuvre.

Ces procédés d'immobilisation visent essentiellement à éviter que le mercure ne soit libéré dans l'atmosphère, par volatilisation, et dans le sol, par lixiviation.

Les procédés d'immobilisation sont l'encapsulation, l'amalgamation et la stabilisation.

L'encapsulation est l'immobilisation physique des éléments dangereux en enveloppant le déchet dans une matrice non poreuse et imperméable pour éviter la libération des vapeurs de mercure et prévenir aussi la lixiviation du mercure.

Les procédés d'encapsulation connus sont l'utilisation de ciments à base de polymères soufrés ou de céramiques phosphatées. Le polyéthylènes, les polyesters, le polysiloxane et autres peuvent également être utilisés. Ces procédés peuvent inclure une étape de stabilisation chimique du mercure.

Ainsi, le document US-B1-6,399,849 du Brookhaven National Laboratory décrit l'utilisation d'un ciment à base de polymères soufrés pour traiter le mercure. Ce procédé s'effectue en deux étapes :
- les polysulfures du polymère soufré transforment le mercure en sulfure de mercure (HgS) ;
- le déchet HgS formé est solidifié dans le ciment.

L'amalgamation est l'immobilisation physique du mercure avec un autre métal pour former un alliage semi-solide ou amalgame.

Le mercure s'amalgame avec presque tous les métaux mais plus particulièrement avec le cuivre, le nickel, l'étain, le zinc, l'or ou l'argent. Le problème de cette technique est qu'elle ne réduit pas de manière significative la lixiviation et la volatilisation du mercure. Ce procédé doit donc être suivi d'une étape d'encapsulation.

La stabilisation est l'immobilisation chimique par combinaison avec des espèces immobiles afin de réduire la libération des éléments dangereux dans l'atmosphère ou la biosphère. Le procédé qui fait l'objet de l'invention appartient plus particulièrement à ce type de procédé de traitement du mercure.

La stabilisation du mercure métallique la plus courante dans la littérature est celle avec du soufre bien que cette technique soit couramment définie comme une technique d'amalgamation dans les brevets dont elle fait l'objet. Ce terme semble impropre, en effet une réaction se produit bien entre le mercure et le soufre, qui doit être qualifiée de "stabilisation".

On forme ainsi un sulfure de mercure ou métacinabre très insoluble dans l'eau (0,0125 mg/L) transformé en sulfure rouge ou cinabre par chauffage (à une température de 386°C).

Dans le cas du mercure au degré d'oxydation +II, la stabilisation est obtenue par précipitation avec du sulfure de sodium, du sulfure d'hydrogène, ou encore avec de la trimercapto-s-triazine.

L'inconvénient de ces techniques est la nécessité d'une pré-oxydation du mercure à l'état d'oxydation +II en solution aqueuse.

Il est donc préférable d'utiliser, lorsque l'on souhaite traiter du mercure métallique, élémentaire, comme c'est le cas dans la présente, la technique de stabilisation entre le mercure élémentaire et le soufre solide selon la réaction suivante :

Hg + S → HgS.

Le document US-A-5 034 054 décrit un procédé dans lequel du mercure métallique est mélangé à une poudre inorganique ce qui conduit à une liaison permanente du mercure à la poudre sous forme solide. L'"amalgame" obtenu peut être facilement et, sans risques, stocké dans une décharge.

La poudre inorganique est choisie parmi les poudres de métaux de transition qui sont réactifs avec le mercure, et la poudre de soufre.

La poudre de soufre est ajoutée au mercure dans un rapport S:Hg d'au moins 1:1, et de préférence de l'ordre d'au moins 3:1 en masse.

La poudre inorganique et le mercure sont placés de préférence dans un récipient jetable et sont soumis à une agitation non intrusive.

Le récipient avec l'amalgame est stocké ensuite dans une décharge.

L'agitation non intrusive est mise en oeuvre en plaçant le récipient jetable dans un dispositif du type mélangeur à peinture qui réalise une agitation selon trois axes.

Il est mentionné que d'autres types d'agitation non intrusive pourraient éventuellement donner de bons résultats, sans autres détails.

Les dispositifs utilisés dans ce document ne sont pas hermétiques.

Le document de R. STEWART et al., "Proceedings of the International Conference on Decommissioning and Decontamination and on Nuclear and Hazardous Waste Management", Denver, 13-18 Sept. 1998, volume 3, pages 33-36 rend compte des résultats obtenus lors d'essais "d'amalgamation" du mercure par le soufre. Le mercure liquide est stabilisé par du soufre sous la forme de poudre dans un broyeur-mélangeur commercial. L'addition du mercure se fait de manière contrôlée sur le soufre.

La température du mélange est mesurée en continu et des échantillons sont analysés périodiquement pour déterminer la quantité de mercure libre. La réaction est réalisée à température ambiante.

Les procédés décrits dans les deux documents cités plus haut font appel à la réaction suivante :

Hg + S → HgS.

Dans les procédés de ces deux documents, le soufre est ajouté en large excès par rapport au mercure à savoir avec un rapport Hg/S de 1/1 à 1/3 en masse (ce qui correspond à un rapport molaire Hg/S de 1/6,5 à 1/19). La conséquence de ce large excès de soufre est la formation d'un volume de produit HgS et soufre très important.

En outre, les procédés de ces deux documents ne garantissent pas l'absence de vapeurs de mercure dans la zone où s'effectue la réaction et une protection spécifique des personnels et/ou une ventilation sont donc nécessaires pour la mise en oeuvre de ces procédés.

Le document de Lawrence N. OJI "Mercury Disposal via Sulfur Reactions", Journal of Environmental Engineering, October 1998, pages 945-952, concerne le traitement du mercure, en particulier du mercure radioactif, par le soufre en vue de son stockage.

Du mercure élémentaire est transformé en ses sulfures en mélangeant du mercure avec de la poudre de soufre dans un mélangeur à fort taux de cisaillement avec des vitesses de pales de l'agitateur jusqu'à 19000 tours/min, ou dans un réacteur avec des vitesses de pales de 1000 tours/min au moins.

On prépare ainsi du HgS sous les formes cristallines α et β (cinabre et métacinabre), le réacteur permet seulement la production de sulfure mercurique noir (métacinabre) tandis que le mélangeur à fort taux de cisaillement permet de préparer aussi bien le sulfure mercurique noir que le rouge.

Il est nécessaire avec le mélangeur à fort taux de cisaillement de maintenir des conditions de refroidissement et d'atmosphère inerte en continu sinon le danger de combustion du soufre et d'incendie augmente. Avec le réacteur, on ne peut obtenir que du sulfure mercurique noir à cause de la vitesse de rotation limitée des pales, du volume d'air fixe et de la circulation d'eau de refroidissement dans le réacteur.

Les conditions de mise en oeuvre du procédé décrit dans le document de OJI sont des conditions extrêmes, il nécessite en effet des systèmes d'inertage, de refroidissement à l'eau, de mesure de la température ; ainsi qu'une soupape de sécurité, et un contrôle permanent de la montée en température et en pression du système. Outre les conditions de mise en oeuvre du procédé, un autre inconvénient de celui-ci réside dans l'impossibilité d'extraire l'oxyde de tritium ou l'eau tritiée.

Il ressort de ce qui précède qu'il existe un besoin pour un procédé de stabilisation du mercure métallique par réaction du mercure métallique avec le soufre à l'état solide qui soit simple, facile à mettre en oeuvre, fiable, sûr, de courte durée et de faible coût et qui assure un rendement élevé de la réaction.

Il existe en particulier un besoin pour un tel procédé qui assure avec une grande efficacité la protection des personnes mettant en oeuvre ledit procédé sans avoir recours à des dispositifs complexes.

Il existe encore un besoin pour un procédé qui génère un volume de produit final sulfure de mercure HgS réduit afin de réduire les coûts de manutention, d'entreposage et de stockage d'un tel produit.

Ce produit final doit présenter la sensibilité la plus faible possible aux tests de lixiviation, et améliorer les résultats obtenus dans ce domaine avec les procédés de l'art antérieur.

Dans le cas particulier du mercure radioactif, le procédé doit permettre de diminuer la contamination du sulfure de mercure formé après stabilisation.

Le but de la présente invention est de fournir un procédé de stabilisation du mercure métallique par réaction du mercure métallique avec le soufre à l'état solide qui réponde entre autres aux besoins énumérés ci-dessus et qui satisfasse aux exigences et critères mentionnés plus haut.

Ce but, et d'autres encore, sont atteints, conformément à la présente invention, par un procédé de stabilisation du mercure métallique par réaction du mercure métallique avec le soufre à l'état solide, dans lequel on met en contact le mercure et le soufre, à un rapport molaire Hg/S de 1/1 à 1/3, dans un réacteur solidaire d'un tube creux en communication fluidique avec l'espace intérieur dudit réacteur, ledit tube creux comprenant une première extrémité reliée à la paroi dudit réacteur et une seconde extrémité éloignée dudit réacteur ; ledit tube creux et ledit réacteur étant hermétiquement fermés, ledit tube creux étant pourvu de moyens de mise en rotation externes audit tube et audit réacteur pour mettre en rotation ledit réacteur et ledit tube autour de l'axe dudit tube, et ledit tube creux étant muni à son extrémité éloigné du réacteur de moyens pour introduire le soufre et le mercure à l'intérieur du réacteur et décharger les produits de la réaction.

Le procédé selon l'invention est défini par un ensemble de caractéristiques spécifiques.

Il est tout d'abord à noter que le procédé selon l'invention met en oeuvre du mercure métallique et du soufre à l'état solide et non une solution aqueuse de Hg(II) qui nécessite pour sa préparation une oxydation préalable du mercure.

Le procédé selon l'invention génère un volume de produit plus faible que dans l'art antérieur.

Le procédé selon l'invention met en oeuvre un rapport molaire Hg/S spécifique de 1/1 à 1/3, ce qui correspond à un rapport massique de 1/0,16 à 1/0,48. Un tel rapport molaire permet de diminuer le volume de produit formé d'un facteur compris entre 4 et 12, suivant la stoechiométrie, par rapport aux procédés de l'art antérieur tels que celui décrit dans le document US-A-5,034,054.

Le procédé selon l'invention est mis en oeuvre dans un réacteur spécifique qui est solidaire d'un tube creux en communication fluidique avec l'espace intérieur dudit réacteur.

Ledit tube creux est pourvu de moyens de mise en rotation externes audit tube et audit réacteur pour mettre en rotation ledit réacteur et ledit tube autour de l'axe dudit tube.

Ce réacteur qui intègre un tube jouant le rôle d'un tube d'agitation creux dont il est solidaire, est d'une grande simplicité.

L'agitation est du type non intrusif, il s'agit d'une agitation en rotation qui fait appel à des moyens de mise en rotation tels qu'un moteur, qui sont externes au tube et au réacteur et qui sont totalement indépendants de ceux-ci. Ces moyens, à la différence des systèmes d'agitation intrusifs ne sont donc pas contaminés par les réactifs et ne doivent pas être changés entre chaque lot de traitement accroissant ainsi le volume des déchets générés.

Aucun échauffement n'est induit par l'agitation en rotation de l'invention au contraire du système d'agitation utilisé dans le document de OJI qui provoque un fort échauffement et impose l'inertage et la présence d'un système de refroidissement.

Il est à noter en outre que l'agitation mise en oeuvre selon l'invention ne nécessite pas de moyens complexes d'étanchéité au passage de la paroi du réacteur car l'agitation est générée par des moyens totalement extérieurs au réacteur.

L'agitation en rotation selon l'invention est beaucoup plus facile à mettre en oeuvre que l'agitation selon trois axes décrite dans le document US-A-5,034,054 et est d'une plus grande efficacité.

Du fait de la structure spécifique du réacteur mis en oeuvre dans le procédé de l'invention, et des moyens de mise en rotation externe dont il est pourvu, le réacteur peut être facilement muni de moyens pour introduire, charger, les réactifs à savoir le soufre et le mercure à l'intérieur du réacteur et retirer, décharger le produit issu de la réaction, à savoir HgS, car il se produit une réaction totale entre le soufre et le mercure.

Ces moyens sont prévus à l'extrémité du tube creux éloignée du réacteur. Il n'est pas nécessaire de désolidariser le système d'agitation et le réacteur pour introduire ou retirer les réactifs et produits de ce dernier, car le chargement/déchargement se fait par l'arbre, tube d'agitation creux qui est solidaire du réacteur et qui est intégralement formé avec celui-ci. Le chargement/déchargement peut être manuel ou automatique et est grandement simplifié par rapport aux procédés de l'art antérieur.

Le réacteur ainsi que le tube sont hermétiquement fermés ce qui assure au contraire des dispositifs de l'art antérieur une mise en oeuvre du procédé en toute sécurité aussi bien pour l'environnement que pour le personnel.

Le réacteur et le tube hermétiquement fermés permettent d'isoler le personnel des vapeurs de mercure et d'éviter d'avoir recours à un système de ventilation.

Avantageusement, le réacteur est un réacteur essentiellement sphérique, un tel réacteur est généralement qualifié de "ballon".

Avantageusement, le réacteur est muni de moyens de chauffage et/ou de moyens de refroidissement. Un chauffage permet d'accélérer la réaction du mercure avec le soufre.

La réaction est généralement réalisée à une température de 20 à 100°C, de préférence de 60 à 80°C à la pression atmosphérique.

L'axe principal du tube peut être confondu avec l'axe du réacteur, l'agitation est donc produite par une rotation symétrique autour de cet axe.

L'axe principal du tube peut aussi être décalé par rapport à l'axe du réacteur.

Le procédé selon l'invention s'applique au traitement du mercure métallique.

Le mercure mis en oeuvre dans le procédé selon l'invention peut être du mercure contaminé par des impuretés, contaminants, volatils et/ou non volatils par exemple solides.

Il est à noter que des quantités importantes de mercure métallique et de déchets solides mercuriels sont présentes sur des sites nucléaires par exemple en France.

Le procédé selon l'invention s'applique tout particulièrement au traitement du mercure contaminé par des radioéléments dont la nature et la teneur dans le mercure peuvent varier. Il peut s'agir de radioéléments volatils par exemple de tritium sous la forme d'eau tritiée ou de radioéléments non volatils, lourds par exemple du plutonium et/ou de l'uranium sous forme d'oxydes.

Le procédé selon l'invention peut aussi être utilisé pour des déchets solides contenant du mercure.

Préalablement à la réaction avec le soufre, on peut réaliser une distillation du mercure (seul) dans le cas où celui-ci est contaminé ou est présent, contenu dans des déchets solides.

Cette distillation s'avère particulièrement utile dans le cas où le mercure est du mercure contaminé par des radioéléments, car elle permet de diminuer la contamination radiologique du sulfure de mercure (HgS) formé après stabilisation.

Dans le cas où le mercure est contaminé par des contaminants volatils, cette distillation, qui est opérée sur le mercure seul avant tout contact avec le soufre, peut être réalisée à une température moyenne, à savoir à une température généralement de 90 à 120°C à la pression atmosphérique.

Dans ce cas, ce sont donc essentiellement les contaminants volatils contenus dans le mercure tels que l'eau par exemple l'eau tritiée qui sont éliminés.

Cette distillation est réalisée de préférence dans le même réacteur où a lieu la réaction avant introduction du soufre dans ledit réacteur pour former HgS.

Afin de réaliser cette distillation à température moyenne, des moyens de distillation sont prévus sur ledit tube creux.

Dans le cas où le mercure est contaminé par des contaminants non volatils, "lourds" ou est contenu dans des déchets solides, cette distillation peut être réalisée à une température élevée à savoir par exemple de 360°C, à la pression atmosphérique, moyennant quoi c'est alors le mercure qui se distille et qui est recueilli dans un récipient (ballon) de récupération. Il reste dans le réacteur où a eu lieu la distillation les impuretés, contaminants, non volatils telles que les oxydes des éléments lourds Pu et U qui sont récupérés. On isole ainsi le mercure des déchets solides "propres".

La réaction entre le mercure et le soufre peut alors être réalisée dans le récipient tel qu'un ballon où a été recueilli et où est contenu le mercure distillé, conformément au procédé selon l'invention, ledit récipient jouant alors le rôle du réacteur mis en oeuvre dans le procédé.

Dans le cas où l'on réalise une distillation des contaminants volatils ou du mercure, les températures de distillation peuvent être fortement abaissées par réduction de la pression à l'intérieur du récipient où a lieu la distillation, par exemple du réacteur, à une pression inférieure à la pression atmosphérique, par adjonction, par exemple, d'une pompe à vide.

Le réacteur utilisé selon l'invention, qui est hermétiquement clos, permet effectivement d'opérer de la sorte, et de réaliser une distillation, sous pression réduite (par rapport à la pression atmosphérique).

L'invention sera mieux comprise à la lecture de la description qui va suivre, donnée à titre illustratif et non limitatif en référence au dessin joint dans lequel :

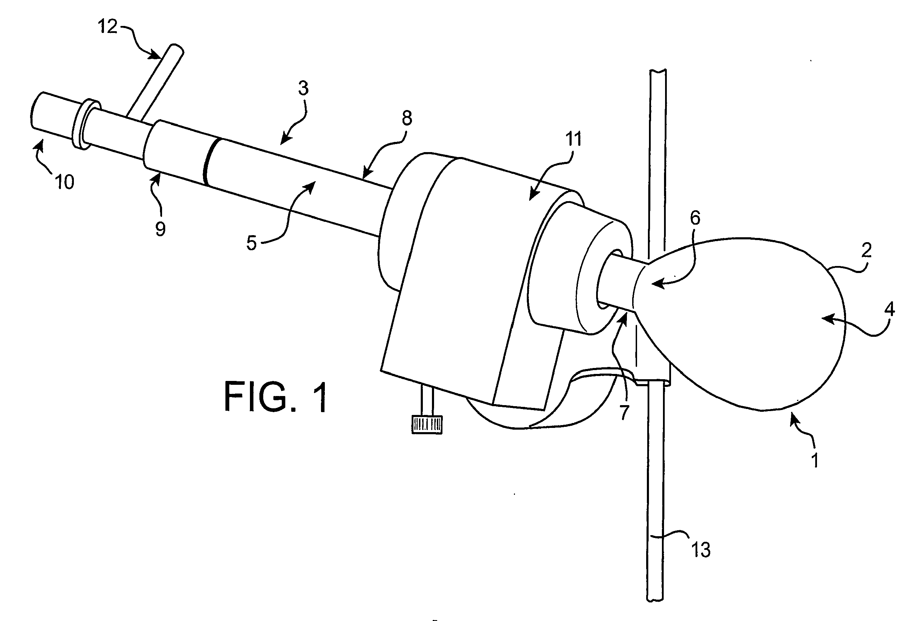

- la figure 1 est une vue schématique en coupe partielle d'un réacteur pour la mise en oeuvre du procédé selon l'invention.

Sur la figure 1, on a représenté un réacteur tel qu'il est utilisé pour mettre en oeuvre le procédé de l'invention. Le réacteur (1) en tant que tel comporte une enceinte, de préférence, essentiellement sphérique ; dont la paroi (2) est réalisée en un matériau inerte vis-à-vis des réactifs, à savoir vis-à-vis du soufre et du mercure métallique, par exemple le verre.

Cette enceinte généralement sphérique, est solidaire d'un tube creux (3) de section droite généralement circulaire. L'espace intérieur (4) du réacteur (1) et l'espace intérieur (5) du tube se trouvent en communication fluidique par l'intermédiaire d'un orifice (6), généralement circulaire pratiqué dans la paroi (2) du réacteur. Ledit tube (3) comprend une première extrémité (7) reliée à la paroi (2) du réacteur (1) où les parois (8) dudit tube et la paroi (2) du réacteur (1) se rejoignent et une seconde extrémité (9) éloignée du réacteur.

La paroi (2) du réacteur et les parois (8) du tube peuvent être intégralement formées ; ou bien le raccordement peut se faire par l'intermédiaire d'un joint rodé classique.

A l'extrémité (9) du tube creux éloignée du réacteur sont prévus des moyens pour introduire les réactifs dans le réacteur et/ou retirer les produits de la réaction du réacteur.

Ces moyens comprennent généralement une valve de fermeture (10) permettant une fermeture hermétique de l'ensemble du réacteur (1) et du tube (3).

Le réacteur et le tube sont hermétiques, en d'autres termes tous les éléments en contact avec le mercure ou susceptibles d'entrer en contact avec celui-ci sont confinés.

Le réacteur est muni de moyens de mise en rotation qui sont, selon l'invention, des moyens externes audit tube et audit réacteur, c'est-à-dire des moyens indépendants de la partie réacteur.

Ces moyens comprennent généralement un moteur (11) et un système d'engrenage (non visible sur le dessin) destiné à communiquer le mouvement de rotation à l'ensemble du réacteur et du tube.

Le dispositif selon l'invention peut comprendre également des moyens de distillation. Ces moyens de distillation comprennent généralement un réfrigérant (colonne verticale) qui est fixé par exemple par vissage sur le tube creux. Cette colonne est donc différente du tube creux solidaire du réacteur.

Ou bien, on peut prévoir un ballon de récupération pour récupérer le mercure avec un piège froid, dans le cas où l'on procède à une distillation préalable du mercure à une température élevée par exemple de 360°C.

Le mercure récupéré avec le soufre réagit alors dans ledit ballon de récupération conformément au procédé de l'invention ou bien le mercure est tranféré dans un autre réacteur par exemple un ballon dans lequel il réagit avec le soufre conformément au procédé de l'invention.

Lesdits réfrigérants, ballons de récupération sont généralement reliés au tube creux par l'intermédiaire d'une connexion supplémentaire (12) munie par exemple d'un raccord à vis comme indiqué plus haut.

Le réacteur peut comprendre également des moyens de chauffage additionnels (non représentés) par exemple sous la forme d'un système électrique entourant le réacteur.

Le réacteur peut aussi comprendre des moyens de refroidissement, par exemple sous la forme d'un bain d'eau glacée, d'un récipient rempli de glace entourant le réacteur.

Dans le cas d'un traitement du mercure par le soufre, ces moyens de refroidissement ne sont pas utilisés.

Des moyens de mise sous vide peuvent être ajoutés par l'intermédiaire de la connexion supplémentaire (12) présente généralement à l'extrémité du tube creux la plus éloignée du réacteur.

Sur la figure 1, le dispositif comprenant le réacteur, le tube creux, le moteur et les engrenages, etc... est fixé à une tige de fixation (13) mais d'autres moyens de fixation peuvent évidemment être utilisés.

L'invention va maintenant être décrite en référence aux exemples suivants donnés à titre illustratif et non limitatif :

### EXEMPLES

Dans les exemples qui suivent, on met en oeuvre le procédé selon l'invention, avec une agitation non intrusive. Le montage utilisé correspond sensiblement à celui décrit sur la figure 1 avec un réacteur ayant la forme d'un ballon d'un volume de 50 ml, 100 ml, 250 ml, ou 2000 ml et des moyens de chauffage constitués par des systèmes de chauffage électriques entourant le ballon.

Les exemples 1 à 5 sont réalisés à l'échelle du laboratoire (avec une masse de mercure initiale de 55 g environ). Dans l'exemple 7, la réaction est réalisée à l'échelle semi-pilote avec une masse de mercure de 1 kg environ. Dans l'exemple 6, l'influence de la vitesse d'agitation est étudiée à l'échelle du laboratoire et à l'échelle semi-pilote.

Dans l'exemple 8, les analyses du produit fini et de l'éluat issu de la lixiviation du produit fini sont rapportées.

Dans l'exemple 9, les résultats des analyses décrits dans l'exemple 8, sont comparés aux critères d'admission réglementaires en stockage.

### Exemple 1

Dans cet exemple, on étudie l'influence de la stoechiométrie S/Hg sur la réaction.

Une première expérience.a consisté à faire réagir du soufre et du mercure dans un rapport molaire S/Hg de 1,5 dans un réacteur de 100 ml à une vitesse de rotation de 50 tours/min à température ambiante.

Après 24h d'agitation, une mesure de mercure gazeux indique que la réaction n'est pas complète. En effet la teneur en Hg(g) est supérieure à 2000 µg/m³. Cette expérience est donc arrêtée.

Une deuxième expérience a été réalisée avec un rapport molaire S/Hg de 3 dans un réacteur de 100 ml à une vitesse de rotation de 50 tours/min, à température ambiante. La même observation est faite que précédemment après 24h d'agitation.

Ces deux expériences montrent que la vitesse de réaction entre le mercure et le soufre est lente à température ambiante. L'échelle de temps d'observation des expériences n'est pas suffisante pour montrer une quelconque influence de la stoechiométrie sur la vitesse de la réaction, à température ambiante.

### Exemple 2

Dans cet exemple, on étudie l'influence de la température du milieu réactionnel sur la réaction.

Une série d'expériences a été réalisée avec un rapport molaire S/Hg de 1 dans un réacteur de 50 ml avec une vitesse de rotation de 50 tours/min et à des températures de 40°C, 60°C et 80°C.

Après 24h d'agitation, une mesure de mercure gazeux pour chacune des expériences est effectuée. Les résultats sont les suivants :
- T = 40°C : teneur en Hg(g) > 2000 µg/m³
- T = 60°C : teneur en Hg(g) = 1500 µg/m³
- T = 80°C : teneur en Hg(g) = 70 µg/m³.

Cette série d'expériences montre que la vitesse de la réaction entre le mercure et le soufre augmente avec la température.

### Exemple 3

Dans cet exemple, on étudie l'influence du volume libre dans le réacteur sur la réaction.

Une série d'expériences a permis de mettre en évidence que pour une même vitesse de rotation du réacteur, plus le diamètre du réacteur augmente, plus le mercure et le soufre sont plaqués sur les parois, ralentissant la cinétique de la réaction. En effet, la force centrifuge augmente avec le diamètre du réacteur.

### Exemple 4

Dans cet exemple, on étudie l'influence d'une indentation du réacteur sur la réaction.

Plusieurs expériences utilisant un réacteur à indentations, avec des rapports molaires S/Hg différents, ont permis de mettre en évidence une augmentation de la vitesse de la réaction entre le soufre et le mercure. En effet, les indentations sur le réacteur fragmentent la goutte de mercure initialement présente dans le réacteur en petites billes. Cette fragmentation facilite le contact et la réaction entre le mercure et le soufre.

### Exemple 5

Dans cet exemple, on étudie l'influence de la présence d'agents de broyage sur la réaction.

Des expériences ont été réalisées avec un rapport molaire S/Hg de 1 dans un réacteur de 50 ml.

Les agents de broyage testés sont du sable de Fontainebleau (9 g) et des billes de verre de 5 mm de diamètre. L'introduction d'agents de broyage a pour effet de compacter le soufre et le mercure au lieu de fragmenter les réactifs. Cette formation d'agrégats ralentit fortement la vitesse de réaction.

### Exemple 6

Dans cet exemple, on étudie l'influence de la vitesse d'agitation du réacteur sur la réaction.

Plusieurs séries d'expériences à l'échelle du laboratoire (et à l'échelle semi-pilote) ont permis de mettre en évidence l'influence de la vitesse d'agitation du réacteur sur la cinétique de la réaction.

Par exemple, à l'échelle du laboratoire, des expériences ont été réalisées avec un rapport molaire S/Hg de 3, avec une masse de mercure d'environ 55 g, dans un réacteur de 100 ml, à une température de 80°C, pour des vitesses d'agitation de réacteur de 200 tours/min et 60 tours/min.

Après 24h d'agitation, une mesure de mercure gazeux pour chacune des expériences est effectuée. Les résultats sont les suivants :
- v = 200 tours/min : teneur en Hg(g) = 500 µg/m³
- v = 60 tours/min : teneur en Hg(g) = 120 µg/m³

Ces expériences montrent donc que lorsque la vitesse de rotation du réacteur est diminuée, la cinétique de la réaction est plus rapide. Dans le cas où la vitesse de rotation du réacteur est faible, la force centrifuge n'est pas suffisante pour plaquer les réactifs contre les parois du réacteur. Ainsi, la poudre composée des réactifs retombe dans le ballon à chaque rotation du réacteur. Le brassage entre le mercure et le soufre est donc très efficace.

### Exemple 7

Dans cet exemple, la réaction est réalisée à l'échelle semi-pilote.

Dans les exemples (1 à 5 et en partie 6) précédents, des exemples à l'échelle du laboratoire avec une masse de mercure voisine de 55 g ont été décrits.

Dans l'exemple décrit ci-après, les réactions s'effectuent à l'échelle semi-pilote, c'est-à-dire que la quantité de mercure initiale est de l'ordre de 1 kg.

L'objectif de ces essais semi-pilotes est de valider les paramètres déterminés à l'échelle du laboratoire à l'échelle semi-pilote. Deux expériences ont été réalisées :
Expérience 1
   S/Hg = 1,2 (masse de mercure initiale = 1 kg) volume du réacteur = 2 1
   Température = 60°C
   Réacteur à parois lisses
   Vitesse de rotation du réacteur = 200 tours/min
Expérience 2
   S/Hg = 1,2 (masse de mercure initiale = 1 kg) Volume du réacteur = 2 1
   Température = 60°C
   Réacteur avec indentations
   Vitesse de rotation du réacteur = 50 tours/min

Dans le cas de l'expérience 1, après 5h d'agitation, la teneur en mercure gazeux est de 200 µg/m³. Le produit fini se présente, en proportions équivalentes, sous forme d'agrégats gris foncés de dimensions importantes (quelques centimètres) et de poudre fine de couleur gris foncé. Au niveau des agrégats, quelques billes de mercure sont encore visibles.

Dans le cas de l'expérience 2, après 2h d'agitation, la teneur en mercure gazeux est de 200 µg/m³. Le produit fini se présente sous la forme de poudre noire très finement divisée.

Ces deux expériences permettent de confirmer les paramètres de la réaction. Les analyses sur les produits finis issus de ces deux expériences (cf. exemples 8 et 9) sont compatibles avec les critères d'admission fixés par la législation.

Toutefois, l'ajout d'indentations au réacteur et l'utilisation d'une vitesse de rotation du réacteur de l'ordre de 50 tours/min augmentent la cinétique de la réaction et diminuent la granulométrie du produit fini. Ces expériences à l'échelle semi-pilote ont donc permis de valider les paramètres de réaction entre le soufre et le mercure. Le procédé est donc applicable à l'échelle industrielle sur des quantités de l'ordre de plusieurs kg de mercure.

### Exemple 8

Dans cet exemple, on effectue une analyse du produit fini et de l'éluat issu de la lixiviation du produit fini.

Les analyses effectuées sur le produit fini sont une analyse par diffraction des rayons X et une mesure de la siccité.

Le produit fini a ensuite été soumis à un test de lixiviation. Les analyses effectuées sur l'éluat, c'est-à-dire sur la solution de lixiviation, sont une mesure du pH et une analyse de la teneur en mercure.

### - Analyse par diffraction des rayons X

Un diagramme par diffraction des rayons X sur poudre pour les échantillons de poudre obtenu conformément au procédé de l'invention a été réalisé. La stoechiométrie Hg/S est de 1,5. Sur le diagramme, les pics caractéristiques du métacinabre HgS et du soufre (ajouté en excès) sont présents. Cette analyse confirme que la réaction est totale et que le produit formé est le sulfure de mercure.

### - Mesure de siccité

Des mesures de siccité ont été réalisées selon la norme NF ISO 11465 sur divers échantillons de produit fini obtenu conformément au procédé de l'invention, pour des stoechiométries Hg/S de 1,2. En moyenne, la teneur pondérale en matière sèche est de 99,93% et la teneur pondérale en eau est de 0,07%.

### - Test de lixiviation

Des tests de lixiviation, selon la norme NF EN 12457-2, sur les produits finis des expériences 1 et 2 de l'exemple 7 obtenus conformément au procédé de l'invention à l'échelle semi-pilote ont été réalisés.

Dans le cas de l'expérience 1, la granularité du produit fini a été diminuée conformément à la norme appliquée (95% en masse des particules doivent avoir une taille inférieure à 4 mm). Le produit fini issu de l'expérience 2 (poudre très finement divisée) n'a pas subi de réduction de granularité.

Après une agitation de 24h et décantation, l'éluat est filtré sur un filtre à membrane de 0,45 µm, selon la norme déjà citée.

Les éluats issus des lixiviations des produits finis issus des expériences 1 et 2 sont ensuite analysés séparément.

### - Mesure du pH de l'éluat

Les mesures de pH des éluats issus des lixiviations des produits finis des expériences 1 et 2 sont effectuées selon la norme NFT 90008. Les résultats sont les suivants :
- Eluat expérience 1 : pH = 4,55
- Eluat expérience 2 : pH = 4,25

L'acidité des éluats peut s'expliquer par la présence d'un léger excès de soufre dans le produit fini (Hg/S = 1,2) .

### - Teneur en mercure de l'éluat

Les mesures de teneur en mercure dans les éluats issus des lixiviations des produits finis des expériences 1 et 2 de l'exemple 7 sont effectuées selon la norme NF EN 1483. La méthode de digestion aux ultrasons est utilisée. Après réduction par du chlorhydrate d'hydroxylamine et du chlorure stanneux, le mercure est entraîné par un courant gazeux à température ambiante (vapeurs froides). Cette procédure est décrite dans la norme précédemment citée. La teneur en mercure est ensuite calculée après mesure de l'absorbance du mercure à une longueur d'onde de 253,4 nm. Les teneurs en mercure dans les éluats sont les suivantes :
- Eluat expérience 1 : teneur en mercure dans l'éluat = 0,74 mg/kg de produit fini
- Eluat expérience 2 : teneur en mercure dans l'éluat = 0,46 mg/kg de produit fini

Les teneurs en mercure dans les éluats sont faibles, ce qui confirme que le mercure est bien stabilisé par le soufre en accord avec le produit de solubilité du sulfure de mercure HgS de 10⁻⁵⁴ mentionné dans la littérature. La présence de quelques billes de mercure dans le produit fini de l'expérience 1 n'augmente pas de manière pénalisante la teneur en mercure dans l'éluat par rapport à l'expérience 2. Il semblerait que même si on observe ces quelques gouttes de mercure sur le produit fini de l'expérience 1, le mercure est suffisamment immobilisé dans la matrice pour que l'effet de la lixiviation soit négligeable.

### Exemple 9

Dans cet exemple, on étudie si le sulfure de mercure obtenu par le procédé selon l'invention satisfait aux critères réglementaires d'admission en stockage.

Le sulfure de mercure est un déchet dangereux, au sens du décret n°2002-540 du 18 avril 2002 relatif à la classification des déchets pris en application de l'article L.541-24 du Code de l'Environnement.

Il peut être admis en stockage s'il respecte les seuils suivants :
- 4 < pH < 13 : mesure effectuée sur l'éluat
- Siccité > 30%
- Teneur en mercure : Hg < 2 mg/kg de déchet stabilisé sec.

Les analyses réalisées selon les méthodes normalisées (cf. exemple 8) montrent que les seuils d'admission en stockage sont respectés. Le mercure stabilisé par le procédé de l'invention est donc directement admis en site de stockage.

## Revendications

1. Procédé de stabilisation du mercure métallique par réaction du mercure métallique avec le soufre à l'état solide, dans lequel on met en contact le mercure et le soufre, à un rapport molaire Hg/S de 1/1 à 1/3, dans un réacteur solidaire d'un tube creux en communication fluidique avec l'espace intérieur dudit réacteur, ledit tube creux comprenant une première extrémité reliée à la paroi dudit réacteur et une seconde extrémité éloignée dudit réacteur ; ledit tube creux et ledit réacteur étant hermétiquement fermés, ledit tube creux étant pourvu de moyens de mise en rotation externes audit tube et audit réacteur pour mettre en rotation ledit réacteur et ledit tube autour de l'axe dudit tube, et ledit tube creux étant muni à son extrémité éloigné du réacteur de moyens pour introduire le soufre et le mercure à l'intérieur du réacteur et décharger les produits de la réaction.

2. Procédé selon la revendication 1, dans lequel le réacteur est un réacteur essentiellement sphérique.

3. Procédé de stabilisation selon l'une quelconque des revendications précédentes, dans lequel le réacteur est muni en outre de moyens de chauffage et/ou de moyens de refroidissement.

4. Procédé selon l'une quelconque des revendications précédentes, dans lequel la réaction est réalisée à une température de 20 à 100°C, de préférence de 60 à 80°C à la pression atmosphérique.

5. Procédé selon l'une quelconque des revendications précédentes, dans lequel l'axe principal dudit tube est confondu avec l'axe dudit réacteur.

6. Procédé selon l'une quelconque des revendications 1 à 4, dans lequel l'axe principal dudit tube est décalé par rapport à l'axe dudit réacteur.

7. Procédé selon l'une quelconque des revendications précédentes, dans lequel le mercure est du mercure contaminé par des contaminants volatils et/ou non volatils.

8. Procédé selon l'une quelconque des revendications précédentes, dans lequel le mercure est du mercure contaminé par des radioéléments.

9. Procédé selon l'une quelconque des revendications précédentes, dans lequel le mercure est contenu dans des déchets solides.

10. Procédé selon l'une quelconque des revendications 7 à 9, dans lequel préalablement à la réaction avec le soufre, on réalise une distillation du mercure seul.

11. Procédé selon l'une quelconque des revendications 7 à 10, dans lequel le mercure est contaminé par des contaminants volatils et la distillation est réalisée à une température moyenne, par exemple de 90 à 120°C, à la pression atmosphérique, pour éliminer essentiellement les contaminants volatils contenus dans le mercure.

12. Procédé selon la revendication 11, dans lequel la distillation est réalisée dans le réacteur avant introduction du soufre dans le réacteur.

13. Procédé selon la revendication 12, dans lequel afin de réaliser la distillation, des moyens de distillation sont prévus sur ledit tube creux.

14. Procédé selon l'une quelconque des revendications 7 à 10, dans lequel le mercure est contaminé par des contaminants non volatils ou est contenu dans des déchets solides, et la distillation est réalisée à une température élevée, à savoir par exemple de 360°C, à la pression atmosphérique moyennant quoi, le mercure se distille et est recueilli dans un récipient, tel qu'un ballon et les contaminants non volatils sont récupérés.

15. Procédé selon la revendication 14, dans lequel la réaction du mercure avec le soufre est réalisée dans le récipient où a été recueilli le mercure distillé.

16. Procédé selon l'une quelconque des revendications 10 à 15, dans lequel la distillation, réalisée par exemple à l'intérieur du réacteur, est réalisée à une pression inférieure à la pression atmosphérique.

## Claims

1. Process for the stabilization of mercury metal by reaction of the mercury metal with sulphur in the solid state, in which the mercury and the sulphur are brought into contact, at an Hg/S molar ratio of 1/1 to 1/3, in a reactor integral with a hollow pipe in fluid communication with the interior space of said reactor, said hollow pipe comprising a first end connected to the wall of said reactor and a second end distant from said reactor; said hollow pipe and said reactor being hermetically sealed, said hollow pipe being provided with rotating means external to said pipe and to said reactor for rotating said reactor and said pipe around the axis of said pipe, and said hollow pipe being provided, at its end distant from the reactor, with means for introducing the sulphur and the mercury inside the reactor and for discharging the reaction products.

2. Process according to Claim 1, in which the reactor is an essentially spherical reactor.

3. Stabilization process according to either one of the preceding claims, in which the reactor is additionally equipped with heating means and/or with cooling means.

4. Process according to any one of the preceding claims, in which the reaction is carried out at a temperature of 20 to 100°C, preferably of 60 to 80°C, at atmospheric pressure.

5. Process according to any one of the preceding claims, in which the main axis of said pipe is coincident with the axis of said reactor.

6. Process according to any one of Claims 1 to 4, in which the main axis of said pipe is offset with respect to the axis of said reactor.

7. Process according to any one of the preceding claims, in which the mercury is mercury contaminated by volatile and/or nonvolatile contaminants.

8. Process according to any one of the preceding claims, in which the mercury is mercury contaminated by radioelements.

9. Process according to any one of the preceding claims, in which the mercury is included in solid waste.

10. Process according to any one of Claims 7 to 9, in which, prior to the reaction with the sulphur, distillation of the mercury alone is carried out.

11. Process according to any one of Claims 7 to 10, in which the mercury is contaminated by volatile contaminants and the distillation is carried out at a moderate temperature, for example from 90 to 120°C, at atmospheric pressure, to remove essentially the volatile contaminants included in the mercury.

12. Process according to Claim 11, in which the distillation is carried out in the reactor before introduction of the sulphur into the reactor.

13. Process according to Claim 12, in which, in order to carry out the distillation, distillation means are provided on said hollow pipe.

14. Process according to any one of Claims 7 to 10, in which the mercury is contaminated by nonvolatile contaminants or is included in solid waste and the distillation is carried out at a high temperature, namely, for example, of 360°C, at atmospheric pressure, by means of which the mercury is distilled and is collected in a container, flask such as a round-bottomed container, flask, and the nonvolatile contaminants are recovered.

15. Process according to Claim 14, in which the reaction of the mercury with the sulphur is carried out in the container where the distilled mercury has been collected.

16. Process according to any one of Claims 10 to 15, in which the distillation, for example carried out inside the reactor, is carried out at a pressure below atmospheric pressure.

## Patentansprüche

1. Verfahren zur Stabilisierung von metallischem Quecksilber durch Reaktion des metallischen Quecksilbers mit dem Schwefel im festen Zustand, bei dem man das Quecksilber und den Schwefel mit einem Molverhältnis Hg/S von 1/1 bis 1/3 in einem Reaktor in Kontakt bringt, der verbunden ist bzw. aus einem Stück ist mit einem hohlen Rohr, das fluidisch mit dem Innenraum des genannten Reaktors kommuniziert, wobei das genannte hohle Rohr ein erstes, mit der Wand des genannten Reaktors verbundenes Ende und ein zweites, vom Reaktor beabstandetes Ende aufweist und das genannte hohle Rohr und der genannte Reaktor dabei hermetisch verschlossen sind, wobei das genannte hohle Rohr Drehantriebseinrichtungen hat, die sich außerhalb des genannten Rohrs und des genannten Reaktors befinden und die den genannten Reaktor und das genannte Rohr in Drehung um die Achse des genannten Rohrs herum versetzen, und das genannte hohle Rohr an seinem vom Reaktor beabstandeten Ende Einrichtungen zum Eingeben des Schwefels und des Quecksilbers in das Innere des Reaktors und zum Entnehmen der Reaktionsprodukte umfasst.

2. Verfahren nach Anspruch 1, bei dem der Reaktor ein im Wesentlichen kugelförmiger Reaktor ist.

3. Verfahren nach einem der vorhergehenden Ansprüche, bei dem der Reaktor außerdem mit Heizeinrichtungen und/oder Kühleinrichtungen ausgerüstet ist.

4. Verfahren nach einem der vorhergehenden Ansprüche, bei dem die Reaktion bei einer Temperatur von 20 bis 100 °C, vorzugsweise 60 bis 80 °C unter Umgebungsdruck realisiert wird.

5. Verfahren nach einem der vorhergehenden Ansprüche, bei dem die Hauptachse des genannten Rohrs mit der Achse des genannten Reaktors übereinstimmt.

6. Verfahren nach einem der Ansprüche 1 bis 4, bei dem die Hauptachse des genannten Rohrs versetzt ist in Bezug auf die Achse des genannten Reaktors.

7. Verfahren nach einem der vorhergehenden Ansprüche, bei dem das Quecksilber kontaminiert ist durch flüchtige und/oder nichtflüchtige Kontaminanten.

8. Verfahren nach einem der vorhergehenden Ansprüche, bei dem das Quecksilber ein durch Radioelemente kontaminiertes Quecksilber ist.

9. Verfahren nach einem der vorhergehenden Ansprüche, bei dem das Quecksilber in festen Abfällen enthalten ist.

10. Verfahren nach einem der Ansprüche 7 bis 9, bei dem man vor der Reaktion mit dem Schwefel eine Destillation nur des Quecksilbers realisiert.

11. Verfahren nach einem der Ansprüche 7 bis 10, bei dem das Quecksilber mit flüchtigen Kontaminanten kontaminiert ist und die Destillation bei einer mittleren Temperatur realisiert wird, zum Beispiel bei 90 bis 120 °C, unter Umgebungsdruck, um im Wesentlichen die in dem Quecksilber enthaltenen flüchtigen Kontaminanten zu eliminieren.

12. Verfahren nach Anspruch 11, bei dem die Destillation in dem Reaktor vor dem Eingeben des Schwefels in den Reaktor realisiert wird.

13. Verfahren nach Anspruch 12, bei dem Einrichtungen zur Realisierung der Destillation an bzw. auf dem genannten hohlen Rohr vorgesehen sind.

14. Verfahren nach einem der Ansprüche 7 bis 10, bei dem das Quecksilber mit nichtflüchtigen Kontaminanten kontaminiert ist oder in festen Abfällen enthalten ist und die Destillation bei einer hohen Temperatur realisiert wird, nämlich zum Beispiel bei 360 °C unter Umgebungsdruck, wodurch sich das Quecksilber destilliert und von einem Behälter, etwa einem Kolben, aufgenommen wird und die nichtflüchtigen Kontaminanten gewonnen bzw. gesammelt werden.

15. Verfahren nach Anspruch 14, bei dem die Reaktion des Quecksilbers mit dem Schwefel in dem Behälter realisiert wird, wo das destillierte Quecksilber gesammelt worden ist.

16. Verfahren nach einem der Ansprüche 10 bis 15, bei dem die Destillation, zum Beispiel im Innern des Reaktors realisiert, bei einem niedrigeren Druck als dem Umgebungsdruck realisiert wird.
